# EUROPEAN PATENT SPECIFICATION

(11) **EP 1 950 181 B1**
(45) Date of publication and mention of the grant of the patent: **12.08.2009**
(21) Application number: 07101175.3
(22) Date of filing: 25.01.2007
(51) Int. Cl.: C02F 1/56, C02F 11/14

(54) **Chemical composition and process for treating geotechnical slurries**
Chemische Zusammensetzung und Verfahren zur Behandlung von geotechnischen Schlämmen
Composition chimique et procédé de traitement de boues géotechniques

(43) Date of publication of application: 30.07.2008
(73) Proprietor: GEO - Ground Engineering Operations Produtos e Solucoes de Engenharia e Geotecnia, Lda, 2770-071 Paco de Arcos (PT)
(72) Inventor: Bostyn, Arnaud R.W., 1180, Brussels (BE); Capitao-Mor da Costa e Silva, Jorge, 1990-238 Lisboa (PT)
(74) Representative: Leherte, Georges M.L.M.

(56) References cited:
- EP-A1- 0 545 383
- JP-A- 10 076 109
- JP-A- 11 333 209
- JP-A- 56 076 293
- JP-A- 2001 064 637
- JP-A- 2002 102 860

## Description

The invention relates to the area of handling / treating dispersions, in particular in view of separating undesirable fractions of dispersed materials from such dispersions.

Such separation techniques are particularly useful, as for instance in the case of soil stabilization slurries (geotechnical slurries).

When performing soil drilling, such as for foundations, including piles, for supporting a building, bridge or port, and more generally when a bored hole is drilled through soil, these bored holes need to be stabilized during the process of excavation, until the proper depth is achieved. In soft soils, a soil stabilizer prevents sloughing or even total collapse of the excavation. There are several stabilizers that can be used, such as drilling fluids, casings (steel tube), etc.

When the bored hole reaches the intended depth, a rebar cage is set in place. Concrete is than poured, and the drilling fluid is recovered and reused for subsequent excavation operations.

A similar process is used for diaphragm wall constructions, amongst others for tunneling purposes or just for construction of building basements in poor soils.

Also the drilling of holes for the oil industry requires slurry fluids, for side wall containment.

In the process of drilling a hole in the ground to a given diameter and depth, of placing rebar cages and of afterward pouring concrete, one can thus use stabilizing fluids while drilling. One of the common stabilizing / drilling fluids generally used is bentonite (i.e. a mineral, processed clay, treated with chemical components). While the drilling progresses there is a tendency for solids to become suspended by the bentonite fluid. These solids do not settle easily through time. When the desired depth is achieved the bentonite fluid must be cleaned and a part of the solids must be removed. Generally no more than 5% of particles (sand) are allowed to contaminate the fluid prior to placing concrete.

Depending on the volume of bentonite to be treated and depth this process either requires a down hole pump or airlifting to recuperate the fluid to be cleaned while recycled cleaned bentonite is being fed to the hole. The procedure up to now includes a complex device (de-sanding unit) that mechanically removes solids in suspension. This process generally requires 30 minutes to 3 hours but it can take up to 5 hours and more, depending on the soil.

For the state of the art in this respect reference can for instance be given to patent documents GB 1 399 938and WO 2002/092259.

Typical examples of flocculation of bentonite can be found in patent documents EP 0 545 383 and JP 10076109.

To understand the stabilizing mechanism of bentonite, one may visualize it as a set of magnetized bricks with a positive and a negative charge on the opposite side. These platelets, with the initial bleeding, tend to accumulate on the interface of the excavation's walls in an organized way, forming a barrier known as "cake". This barrier is created due to the dual charged platelets referred to above, which allows them to connect to each other and also because they are bigger than the soil particles. These platelets also work as a fluid loss reduction mechanism by covering the voids in the soil of the excavation. The cake
is also the "vehicle" for hydrostatic pressure transfer to the interface of the excavation's walls. From this point on, the excavation is stabilized.

The devices used in industry to clean the bentonite are either hydrocyclones or shakers with screens or a combination of both.

Shakers remove suspended particles (residual solids that remain in suspension from the cuttings while drilling) and separate the liquid (fine clayey particles and water) by use of the screens. These devices require electric power and for huge jobs some of these high powered equipments use a lot of energy that keep adding up to the job cost.

Hydrocyclones basically centrifuge the liquid forcing the solids (heavier
particles than bentonite itself) to separate. Some jobs or contractors may choose a combination of both methods.

Whatever method practiced, the removal of contaminating solids from stabilizing / drilling fluids, is currently a time consuming and costly process.

The process in accordance with the invention, be applied to separate essentially all solids from the slurry.

The invention therefor provides a process as defined in claim 1.

The dispersion agent composition is added to said slurry of bentonite particles in a ratio of at least 4 liter of dispersion agent composition / m³ of slurry, whereas the mixture of slurry and dispersion agent composition is submitted to a settling / separation step for a period of 1 minute to 5 days, preferably 5 minutes to 1 day, most preferably 5 - 60 minutes, so as to separate the bentonite particles, and any contaminating solids from the liquid.

According to a preferred feature of the invention, the dispersion most suitably consists of a geotechnical slurry, selected from bentonite slurries and mixed bentonite / polymer slurries, comprising contaminating solid particles, whereas at least a substantial part of said contaminating solid particles and bentonite particles are separated from the liquid medium or the polymer dispersion.

Bentonite nowadays tends to be considered an hazard for the environment and most countries are adopting legislation for its disposal during and after the works have been completed. During its manufacture some chemicals are added to it. These chemicals together with fact that bentonite produces cake do not allow life to grow once thrown to the environment. Most sites that accept dumping materials refuse bentonite.

When bentonite is no longer needed as a fluid to stabilize the soil, it is transported from the job site to a proper place where it can be disposed of. Due to environment restrictions, most places don't accept bentonite and don't know how to eliminate it.

In accordance with the present embodiment of the invention, the dispersing agent composition will have the effect of settling all the suspending materials on the bottom of the tank or any convenient reservoir. This operation can take from 5 minutes to 5 days, depending on the soil and the formula of the applied dispersing agent composition. At the end of this operation the tank will have a column of common and clean water that can be dumped without any kind of special treatment and a lay of clay will be at the bottom of the tank. This small amount of clay can now be transported to a proper site and be dumped there.

This process will reduce dramatically costs of bentonite elimination. The price for bentonite elimination is calculated by its cubic meter.

The dispersing agent compositions according to the invention have preferably a total dry matter content ranging from 50 - 950 g/l, more preferably from 300 - 800 g/l.
It must however be understood that more diluted embodiments of the dispersing agent compositions according to the invention are also possible but will require larger amounts (relative to the treated liquid slurries) for implementing the processes according to the invention.

Further details of the invention will become apparent from the following non limiting examples.

### Examples 1 - 4

### Example of a dispersing agent composition

### Example 1 :

130 g of NaOH were added to 500 g of a 50% mixture of "medium molecular weight" polyacrylic acid (~ 4000 g/mol average molar mass) in water, such as SOKALAN CP 10 S from BASF, SOKALAN PA 20 PN from BASF or DISPEX R.50 from CIBA (corresponding products also are available fromROHM & HAAS, NOVEON, ...).
This provided a very good dispersing agent composition according to the invention.

### Example 2 :

Different quantities of the composition of example 1 were combined to an aqueous solution of 500 g/l diphosphoric acid - tetrapotassium salt, as a clear, homogeneous solution, constituted a suitable dispersing agent composition, all yielding very suitable dispersing agent compositions according to the invention.

### Comparative Example 3

Application of a dispersing agent composition to a contaminated bentonite slurry :
Foundation works were being executed for a building construction on a site at Coimbra. This particular job involved the execution of a diaphragm wall with 400 mm in width and panels (sections of the wall) reaching 30 meters in depth. For the excavation a rig equipped with a mechanical grab removed soil as bentonite was being pumped directly at the excavation for soil stabilization purposes. The slurry supplied to the excavation from a batching plant had the following properties: pH values of 9, viscosity value measurements between (API Marsh funnel) 38 to 45 seconds and specific weights ranging from 1, 04 to 1, 08 grams per cubic 3. After the geometry of the panel was completed the slurry had a content of 10 % of sand, resulting from suspended cuttings from the excavation process. This sand content was 7% in excess of what was acceptable by the job specifications.

At this stage 3 liters of the dispersing agent composition of example 3, per m³ of existent slurry volume, were added directly at the mouth of the panel. The grab served as means of agitation of the fluid for rapid distribution.

After 5 minutes the grab removed all settlement at the bottom of the panel and immediately after that sand content values were taken from
the bottom (35 meters)
the middle (20 meters), and
the top (5 meters) of the excavation.
All values showed that the sand content was less than 0, 25%; viscosity values remained as they were in the batching plant, as well as pH and specific weight.

On this job 12 panels with depths in excess of 25 meter followed this procedure.

This process was repeated at eight different sites with radically different geologies, with 5 different types of bentonite.

The applicable concentrations of dispersing agent composition to be added to a volume of bentonite slurry to be treated are stated in table I here below

**Table I**

| **Using varying amounts of dispersing agent composition** | | |
|---|---|---|
| Amount of dispersing agent composition (liters per m³) | Waiting time to achieve sand contents less than 1 % | Bentonite separation or degratation |
| 1 | 15 minutes to 4 hours | doest not occur |
| 1,5 | 15 minutes to 3hours | does not occur |
| 2 | 5 minutes to 2 hours | does not occur |
| 3 | 5 minutes to 45 minutes | does not occur |
| 4 | less than 30 minutes | does not occur |

The treated bentonite was submitted to a Filter Press Test before and after treatment to check weather the slurry could still develop a filter cake and maintain operable characteristics to be re-used for a subsequent excavation, still in conditions for soil stabilization.

Both tests showed no behavioral changes in the bentonite throughout 10 consecutive iterations before and after treatment. Cake measurements showed the same thickness values and filtration ("bleeding") measurements showed the same values.

### Example 4

### Application of a dispersing agent composition to contaminated polymer based slurries

Application of a dispersing agent composition according to example 3 to polymer based slurries resulted in complete separation of solids from the polymer fluid. The polymer itself was not affected, whatever the chosen concentration. The chains of polymer were not affected. Thus we may conclude that the product can be used to rapid settlement of cuttings in suspension but it does not separate the polymer itself from the water. When bentonite is included in the slurry the effect of the dispersing agent composition will still be maintained as described in the above example and with the same concentrations, leaving the polymer unaffected.

Consistent testing has been performed in various types of bentonite fluids with specific weights that ranged from 1, 01 gr/cm3 to 1, 40 gr/cm3. The addition of the dispersing agent composition concentrations of 5 to 10 liters per m3 of volume to be treated allowed to drop down suspended particles immediately and reduce fluid specific weight to half in the following 30 minutes. In 3 to 5 days complete separation of solids from water occurred and settled to the bottom of the reservoir in an extreme compacted fashion.

The recovered water was tested in a Portuguese governmental approved institute that proved the water to be non hazard and able to be disposed without environmental concerns. Smaller concentrations of dispersing agent compositions will deliver results, but waiting times will generally be prolonged.

Further adaptation of the main formulation of the dispersing agent composition to the specific soil contaminants and the bentonite fluid slurries result in more rapid separation of the fluid (separation times ranging from 5 minutes to 5 days).

## Claims

1. Process for treating liquid slurries of bentonite particles, optionally comprising contaminating solids, by adding a dispersing agent composition comprising polyacrylic acid polymers, **characterised in that** bentonite slurries having a specific weight ranging from 1,01 gr/cm³ to 1,40 gr/cm³ are treated by adding a dispersing agent composition comprising 130 g NaOH in 500 g of a 50% mixture of medium molecular weight polyacrylic acid polymer in water, in a ratio of at least 4 liters of dispersing agent composition per m³ of slurry, and **in that** the mixture of slurry and dispersion agent composition is submitted to a settling / separation step for a period of 5 minutes to 5 days, so as to separate the bentonite or the bentonite with the contaminating solids from the liquid thereby causing the bentonite or the bentonite with the contaminating solids to settle.

2. Process according to claim 1, **characterised in that** said dispersing agent composition is added in a ratio of 5 to 10 liter of dispersion agent composition / m³ of slurry.

3. Process according to any one of claims 1 - 2, **characterised in that** the mixture of slurry and dispersion agent composition is submitted to a settling / separation step for a period of 5 minutes to 1 day, so as to separate the bentonite or the bentonite with the contaminating solids from the liquid.

4. Process according to any one of claims 1 - 2, **characterised in that** the mixture of scurry and dispersion agent composition is submitted to a settling / separation step for a period of 5 - 60 minutes, so as to separate the bentonite or the bentonite with the contaminating solids from the liquid.

5. Process according to any one of the preceding claims, **characterised in that** the medium molecular weight polyacrylic acid polymers are selected from SOKALAN CP 10 S from BASF, SOKALAN PA 20 PN from BASF and DISPEX R.50 from CIBA.

## Patentansprüche

1. Verfahren für die Behandlung von flüssigen Aufschlämmungen von Bentonitteilchen, die wahlweise verunreinigende Feststoffe enthalten, durch Hinzusetzen einer Dispergiermittelzusammensetzung, die Polyacrylsäurepolymere umfasst, **dadurch gekennzeichnet, dass** Bentonitaufschlämmungen, die ein spezifisches Gewicht im Bereich von 1,01 g/cm³ bis 1,40 g/cm³ aufweisen, durch Hinzusetzen einer Dispergiermittelzusammensetzung, die 130 g NaOH in 500 g einer 50%igen Mischung von Polyacrylsäurepolymer von mittlerem Molekulargewicht in Wasser umfasst, in einem Verhältnis von mindestens 4 Litern Dispergiermittelzusammensetzung pro m³ Aufschlämmung behandelt werden und **dadurch**, **dass** die Mischung von Aufschlämmung und Dispergiermittelzusammensetzung für eine Zeitspanne von 5 Minuten bis 5 Tagen einem Absetz-/Trennungsschritt unterworfen wird, um den Bentonit oder den Bentonit mit den verunreinigenden Feststoffen von der Flüssigkeit zu trennen, wodurch verursacht wird, dass der Bentonit oder der Bentonit mit den verunreinigenden Feststoffen sich absetzt.

2. Verfahren nach Anspruch 1, **dadurch gekennzeichnet, dass** die Dispergiermittelzusammensetzung in einem Verhältnis von 5 bis 10 Litern Dispergiermittelzusammensetzung/m³ Aufschlämmung zugesetzt wird.

3. Verfahren nach einem der Ansprüche 1 - 2, **dadurch gekennzeichnet, dass** die Mischung von Aufschlämmung und Dispergiermittelzusammensetzung für eine Zeitspanne von 5 Minuten bis 1 Tag einem Absetz-/Trennungsschritt unterworfen wird, um den Bentonit oder den Bentonit mit den verunreinigenden Feststoffen von der Flüssigkeit zu trennen.

4. Verfahren nach einem der Ansprüche 1 - 2, **dadurch gekennzeichnet, dass** die Mischung von Aufschlämmung und Dispergiermittelzusammensetzung für eine Zeitspanne von 5 - 60 Minuten einem Absetz-/Trennungsschritt unterworfen wird, um den Bentonit oder den Bentonit mit den verunreinigenden Feststoffen von der Flüssigkeit zu trennen.

5. Verfahren nach einem der vorhergehenden Ansprüche, **dadurch gekennzeichnet, dass** die Polyacrylsäurepolymere von mittlerem Molekulargewicht unter SOKALAN CP von BASF, SOKALAN PA 20 PN von BASF und DISPEX R.50 von CIBA ausgewählt werden.

## Revendications

1. Procédé pour traiter des boues liquides de particules de bentonite, comprenant facultativement des solides contaminants, en ajoutant une composition d'agent dispersant comprenant des polymères d'acide polyacrylique, **caractérisé en ce que** des boues de bentonite ayant un poids spécifique allant de 1,01 gr/cm³ à 1,40 gr / cm³ sont traitées en ajoutant une composition d'agent dispersant comprenant 130 g de NaOH dans 500 g d'un mélange à 50 % de polymère d'acide polyacrylique de poids moléculaire moyen dans de l'eau, dans un rapport d'au moins 4 litres de composition d'agent de dispersion par m³ de boue, et **en ce que** le mélange de boue et de composition d'agent de dispersion est soumis à une étape de dépôt / de séparation pendant une période de 5 minutes à 5 jours de manière à séparer la bentonite ou la bentonite avec les solides contaminants du liquide amenant ainsi la bentonite ou la bentonite avec les solides contaminants à se déposer.

2. Procédé selon la revendication 1, **caractérisé en ce que** ladite composition d'agent dispersant est ajoutée dans un rapport de 5 à 10 litres de composition d'agent de dispersion 1 m³ de boue.

3. Procédé selon l'une quelconque des revendications 1 - 2, **caractérisé en ce que** le mélange de boue et de composition d'agent de dispersion est soumis à une étape de dépôt / de séparation pendant une période de 5 minutes à 1 jour de manière à séparer la bentonite ou la bentonite avec les solides contaminants du liquide.

4. Procédé selon l'une quelconque des revendications 1 - 2, **caractérisé en ce que** le mélange de boue et de composition d'agent de dispersion est soumis à une étape de dépôt / de séparation pendant une période de 5 - 60 minutes de manière à séparer la bentonite ou la bentonite avec les solides contaminants du liquide.

5. Procédé selon l'une quelconque des revendications précédentes, **caractérisé en ce que** les polymères d'acide polyacrylique de poids moléculaire moyen sont choisis parmi le SOKALAN CP 10 S de BASF, le SOKOLAN PA 20 PN de BASF et le DISPEX R.50 de CIBA.
